# EUROPEAN PATENT SPECIFICATION

(11) **EP 4 253 966 B1**
(45) Date of publication and mention of the grant of the patent: **13.08.2025**
(21) Application number: 23164837.9
(22) Date of filing: 28.03.2023
(51) Int. Cl.: G01N 35/00, G01N 35/02, G01N 35/04

(54) **AUTOMATIC ANALYZER**
AUTOMATISCHES ANALYSEGERÄT
ANALYSEUR AUTOMATIQUE

(30) Priority: 29.03.2022 JP 2022054138
(43) Date of publication of application: 04.10.2023
(73) Proprietor: Canon Medical Systems Corporation, Tochigi 324-0036 (JP)
(72) Inventor: YAMAMOTO, Tetsushi, Otawara-shi 324-0036 (JP); TASHIRO, Shigeyuki, Otawara-shi 324-0036 (JP); IZAWA, Yoshitaka, Otawara-shi 324-0036 (JP); SHINOHARA, Hiroo, Otawara-shi 324-0036 (JP)
(74) Representative: Marks & Clerk LLP

(56) References cited:
- CN-A- 107 923 924
- US-A- 3 756 920
- US-A- 4 430 299
- US-A1- 2010 248 346
- US-A1- 2018 074 043

## Description

### FIELD

Embodiments described herein relate generally to an automatic analyzer.

### BACKGROUND

An automatic analyzer measures a mixed solution of a specimen and a reagent to be measured, thereby measuring components in the specimen. For example, in the case of performing a blood coagulation analysis test on a blood sample, a disposable reaction tube is installed in a reaction bath, and the blood sample and the reagent are dispensed into the installed reaction tube. Then, the mixed solution of the blood sample and the reagent dispensed into the reaction tube is measured using the photometry ports each including a photometry portion. A holder configured to hold the reaction tube and the photometry ports is fixed with respect to a reaction bath, and the reaction bath is fixed inside the apparatus.

In order for an automatic analyzer configured to perform such a blood coagulation analysis test to improve test throughput, for example, there is a method of increasing the number of photometry ports. However, increasing the photometry ports complicates a mechanism for installing a disposable reaction tube in a reaction bath, a mechanism for removing the reaction tube from the reaction bath, and a mechanism for dispensing a blood sample and a reagent. Furthermore, an increase in the number of photometry ports requires upsizing of a reaction bath or an increase in the number of reaction baths, thereby undesirably increasing the overall size of the apparatus.

US patent publication no. US3756920A teaches an automated apparatus for sequentially assaying urine samples for the presence of bacterial adenosine triphosphate. The automated apparatus comprises a rotary table which carries sample containing vials, dispensing means which automatically dispense fluid reagents into the vials at predetermined times preparatory to injecting a light producing luciferase-luciferin mixture into the samples, and indicating means which automatically measure the light produced in each urine sample by a bioluminescence reaction therein of the free bacterial adenosine triphosphate with the luciferase-luciferin mixture. The light measured is proportional to the concentration of bacterial adenosine triphosphate which, in turn, is proportional to the number of bacteria present in the respective urine sample.

### SUMMARY

The invention provides an automatic analyzer of claim 1. In the following, embodiments including all of the features of claim 1 pertain to the invention.

The automatic analyzer may further comprise a first unit fixed to an inside of the reaction bath and connected to each of the photometry portions, wherein the first unit may include at least one of a first function for supplying power acquired from a power source to each of the photometry portions, or a second function for processing a signal acquired from each of the photometry portions.

The automatic analyzer may further comprise a rotation connector configured to electrically connect between a second unit provided outside the reaction bath, and the first unit.

The rotation connector electrically connects between the second unit and each of the photometry portions via the first unit. The rotation connector supplies electric power for activating respective devices provided in the reaction bath from the outside of the coagulation reaction bath, and outputs signals and data generated by the respective devices provided in the reaction bath to the outside of the coagulation reaction bath.

The rotation connector is a connector that can provide electrical connection between a rotating body and a fixed object. The rotation connector may be a slip ring.

The first unit may be a substrate formed into a disc shape with its center being open.

The automatic analyzer may further comprise a flexible printed circuit configured to electrically connect between the first unit and one of the photometry portions. Power supplied from the outside to the reaction bath via the rotation connector is supplied to the respective photometry portions via the first unit and the flexible printed circuit.

The second unit may include one or more of: an analysis mechanism configured to sequentially measure optical property values of the mixed solution of the specimen or the standard solution and the reagent; an analysis circuit configured to generate calibration data and analysis data on coagulation of the blood sample by analyzing the standard data and the subject data generated by the analysis mechanism; a control circuit configured to function as a center of the automatic analyzer; and a power supply device configured to supply power to each of the mechanisms of the automatic analyzer.

Wires that connect between the second unit provided outside the reaction bath and the first unit may be smaller in number than wires that connect between the first unit and each of the photometry portions. Use of the first image can reduce the number of cables for connecting between the reaction bath and the external units and the number of wires and contacts in the rotation connector. Furthermore, transmission of digital data from the first unit to the outside may be performed by serial communication.

The second function may include: a function of acquiring from each of the photometry portions an analog signal indicating a photometry result by the corresponding photometry portion; a function of amplifying the acquired analog signal; a function of converting the amplified analog signal to a digital signal; and a function of outputting the converted digital signal to the second unit.

The automatic analyzer may further comprise a heat suppressor configured to suppress heat generated in the first unit from being transferred to the photometry portions.

The heat suppressor may be made of a material with low thermal conductivity and including a partition provided between the photometry portions and the first unit inside the reaction bath.

The heat suppressor may include a first fan configured to generate a flow of air for cooling the first unit.

The heat suppressor may include a vent for allowing air outside the reaction bath to flow into the reaction bath, and the first fan may exhaust air inside the reaction bath to an outside of the reaction bath.

The heat suppressor may include a vent for allowing air outside the reaction bath to flow into the reaction bath, and the first fan may cause air outside the reaction bath to flow into the reaction bath.

The automatic analyzer may further comprise a second fan provided outside the reaction bath and configured to cause air in a vicinity of the vent to flow.

The automatic analyzer may further comprise: a sensor configured to detect a temperature of air in the vicinity of the vent; and a controller configured to control an activation state of the second fan in accordance with a detection result by the sensor.

The automatic analyzer may further comprise: a storage provided outside the reaction bath and configured to store air which is to flow into the reaction bath through the vent; and a third fan provided in the storage and configured to cause air outside the storage to flow into the storage.

The automatic analyzer may further comprise: a sensor configured to detect a temperature of air inside the storage; and a controller configured to control an activation state of the third fan in accordance with a detection result by the sensor.

The first unit may include a heating concentrator in which heat generating elements are arranged in a concentrated manner, and the fan may be provided in a vicinity of the heating concentrator.

The first unit may include one of the first function and the second function, and the second unit may include another one of the first function and the second function, which is different from the one included in the first unit.

The rotation connector may electrically connect between the first unit and the second unit through contact between solid forms.

The rotation connector may electrically connect between the first unit and the second unit through contact via liquid metal.

The rotation connector may include a slip ring configured to provide electrical connection through contact between solid forms.

The rotation connector may electrically connect between the second unit and the first fan.

### BRIEF DESCRIPTION OF THE DRAWINGS

FIG. 1 is a diagram showing a configuration of an automatic analyzer according to an embodiment.
FIG. 2 is a diagram showing a configuration of an analysis mechanism for the automatic analyzer according to the embodiment.
FIG. 3 is a cross-sectional view showing an internal configuration of a coagulation reaction unit of the automatic analyzer according to the embodiment.
FIG. 4 is a perspective view showing a configuration of a reaction bath of the automatic analyzer according to the embodiment.
FIG. 5 is a perspective view showing a state in which an exterior is removed from the reaction bath shown in FIG. 4.
FIG. 6 is a perspective view showing a configuration of a photometry port of the automatic analyzer according to the embodiment.
FIG. 7 is an enlarged view of the vicinity of the photometry port shown in FIG. 3.
FIG. 8 is a diagram for explaining a flow of air inside the reaction bath shown in FIG. 3.
FIG. 9 is a cross-sectional view showing an internal configuration of a coagulation reaction unit of an automatic analyzer according to a first modification.
FIG. 10 is a cross-sectional view showing an internal configuration of a coagulation reaction unit of an automatic analyzer according to a second modification.
FIG. 11 is a cross-sectional view showing an internal configuration of a coagulation reaction unit of an automatic analyzer according to a third modification.

### DETAILED DESCRIPTION

An automatic analyzer and its embodiments will be described in detail with reference to the drawings. In the following description, structural elements having approximately the same function and configuration will be assigned the same reference symbol, and a repeat description will be given only where necessary.

### (Embodiment)

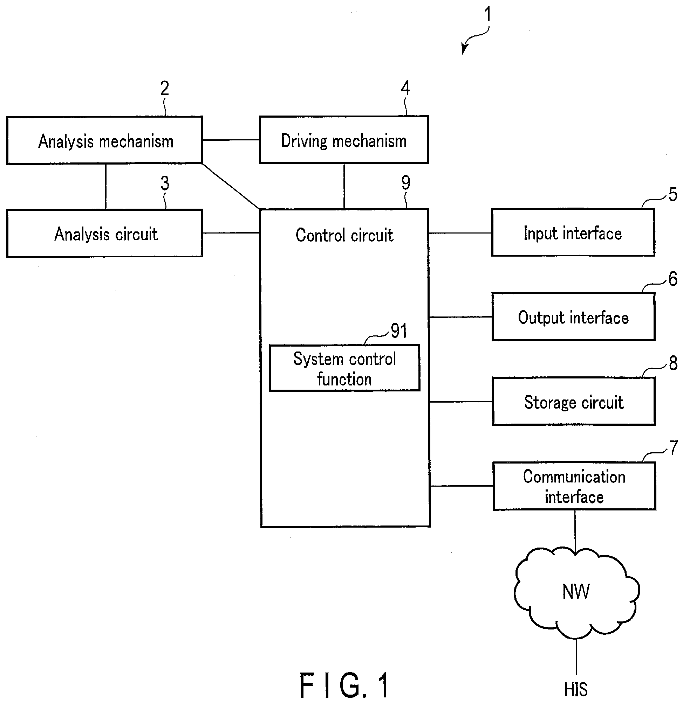

FIG. 1 is a block diagram showing a function configuration of an automatic analyzer according to a present embodiment. An automatic analyzer 1 shown in FIG. 1 includes an analysis mechanism 2, an analysis circuit 3, a driving mechanism 4, an input interface 5, an output interface 6, a communication interface 7, a storage circuit 8, and a control circuit 9 (controller). The automatic analyzer 1 measures a mixed solution of a specimen to be measured, thereby measuring components in the specimen. The automatic analyzer 1 according to the present embodiment can perform a blood coagulation analysis test on a blood sample by using the blood sample as a specimen.

The analysis mechanism 2 mixes a blood sample and each reagent for use in each examination item. In generation of calibration data, the analysis mechanism 2 mixes a standard solution exhibiting a known concentration, and each reagent for use in each examination item. A mixed solution of a blood sample or the standard solution and the reagent is retained at a constant temperature of, for example, 37 °C, which is optimal for enzymatic reactions in the living body. By this, the blood sample and the reagent react with each other.

The analysis mechanism 2 sequentially measures optical property values of the mixed solution of the blood sample or standard solution and the reagent. This measurement generates standard data and subject data both represented by, for example, the transmitted light intensity or absorbance and the scattered light intensity.

The analysis circuit 3 is a processor configured to generate calibration data and analysis data on coagulation of the blood sample by analyzing the standard data and the subject data generated by the analysis mechanism 2. The analysis circuit 3 reads an analysis program from the storage circuit 8, for example, and analyzes the standard data and the subject data in accordance with the read analysis program.

Specifically, the analysis circuit 3 measures the process of coagulation in the mixed liquid, for example, by analyzing the subject data. For example, for analysis of a mixed solution with the addition of a reagent involving a strong reaction, the analysis circuit 3 analyzes the subject data that can be obtained by detecting transmitted light. For example, for analysis of a mixed solution with the addition of a reagent involving a weak and slow reaction, the analysis circuit 3 analyzes the subject data that can be obtained by detecting scattered light. The analysis circuit 3 acquires a change in received light intensity for the blood coagulation reaction based on the subject data. The analysis circuit 3 calculates information on coagulation of a blood sample, such as a coagulation end point, a coagulation point, and a coagulation time, from a reaction curve presenting the change in received light intensity.

Depending on the test item, the analysis circuit 3 calculates a concentration value, etc., based on the calculated coagulation time and calibration data of a test item corresponding to the subject data concerned. The analysis circuit 3 outputs analysis data including a coagulation end point, a coagulation point, a coagulation time, a concentration value, etc., to the control circuit 9.

The driving mechanism 4 drives the analysis mechanism 2 under the control of the control circuit 9. The driving mechanism 4 is realized by, for example, a combination of a gear, a stepping motor, a belt conveyor, a lead screw, and so on.

The input interface 5 is connected to the control circuit 9 so that it converts operational commands and various information items input by an operator into electric signals and outputs them to the control circuit 9. For example, the input interface 5 receives, from the operator, an input of analysis request information including information for specifying a specimen to be analyzed and information for specifying a test item of this specimen. The analysis request information may further include an analysis parameter of a test item for the aforementioned specimen. Furthermore, for example, the input interface 5 receives an input of a shutdown command. The input interface 5 is realized by, for example, one or more of a mouse, a keyboard, a touch pad on which instructions are input by touching an operation screen, and the like.

In this disclosure, the input interface 5 is not limited to physical operating components such as a mouse, a keyboard, and a touch pad. Examples of the input interface 5 also include a processing circuit for electric signals, which is configured to receive an electric signal corresponding to an operational command input from an external input device separate from the automatic analyzer 1, and to output this electric signal to the control circuit 9.

The output interface 6 is connected to the control circuit 9, and outputs the signal supplied from the control circuit 9. The output interface 6 is realized by, for example, one or more of a display circuit, a print circuit, an audio device, and the like. Such a display circuit may include a CRT display, a liquid crystal display, an organic EL display, an LED display, a plasma display, etc. Furthermore, the display circuit may include a processing circuit configured to convert data indicative of a display target into a video signal and externally output the video signal. The print circuit may include a printer, etc. The print circuit may also include an output circuit configured to externally output data indicative of a display target. The audio device may include a speaker, etc. The audio device may also include an output circuit configured to externally output an audio signal.

The communication interface 7 is connected to, for example, the in-hospital network NW. The communication interface 7 performs data communication with a hospital information system (HIS) via the in-hospital network NW. The communication interface 7 may perform data communication with the HIS via a laboratory information system (LIS) connected to the in-hospital network NW. Instead of the input interface 5, the communication interface 7 may receive operational commands and various information items from the operator via the in-hospital network NW.

The storage circuit 8 may include a processor-readable storage medium such as a magnetic storage medium, an optical storage medium, or a semiconductor memory. It is not required to realize the storage circuit 8 by a single storage medium or device. For example, the storage circuit 8 may be realized by multiple storage devices.

The storage circuit 8 stores analysis programs for execution by the analysis circuit 3 and control programs for realization of functions of the control circuit 9. Such a program may be installed in advance in a computer from a network or a non-transitory computer-readable storage medium, for example, so that the program will cause the computer to realize the respective functions of the control circuit 9. Various types of data handled in this disclosure are typically digital data. The storage circuit 8 is an example of a storage.

The storage circuit 8 stores analysis request information received by the input interface 5 or the communication interface 7, and execution information set and updated by the control circuit 9. The execution information is information indicating the progress of analysis executed based on the analysis request information. Furthermore, the storage circuit 8 stores, for each test item, analysis data generated by the analysis circuit 3. The storage circuit 8 stores a test order input from an operator, etc., or a test order received by the communication interface 7 via the in-hospital network NW, etc.

The control circuit 9 is, for example, a processor functioning as a center of the automatic analyzer 1. The control circuit 9 executes the control programs stored in the storage circuit 8 to realize functions corresponding to the executed programs. The control circuit 9 may be provided with a storage area for storing at least a portion of the data stored in the storage circuit 8.

The control circuit 9 implements the operation program to realize a system control function 91. Through the system control function 91, the control circuit 9 takes total control over the components of the automatic analyzer 1 based on, for example, input information input via the input interface 5. The control circuit 9 is an example of the controller.

The present embodiment will be described assuming that a single processor realizes the system control function 91; however, the embodiment is not limited to such a configuration. A plurality of independent processors may be combined to form a control circuit, and each of the processors may implement the control program to realize the system control function 91.

The term "processor" used herein refers to, for example, a central processing unit (CPU) or a graphics processing unit (GPU), or a circuit such as an applicationspecific integrated circuit (ASIC), a programmable logic device (such as a simple programmable logic device (SPLD)), a complex programmable logic device (CPLD), a field programmable gate array (FPGA)), etc. In the case of the processor being a CPU, for example, the processor realizes a function by reading and executing a program stored in a storage circuit. On the other hand, in the case of the processor being, for example, an ASIC, instead of a program being stored in a storage circuit, a corresponding function is directly incorporated as a logic circuit in the circuit of the processor. Each processor of the present embodiment is not limited to a configuration as a single circuit; a plurality of independent circuits may be combined into one processor to realize the function of the processor. Furthermore, multiple components or features as given in FIG. 1 may be integrated as one processor to realize the respective functions. The above description of the "processor" is applicable to the subsequent embodiments and modifications.

Next, a configuration of the analysis mechanism 2 will be described in detail.

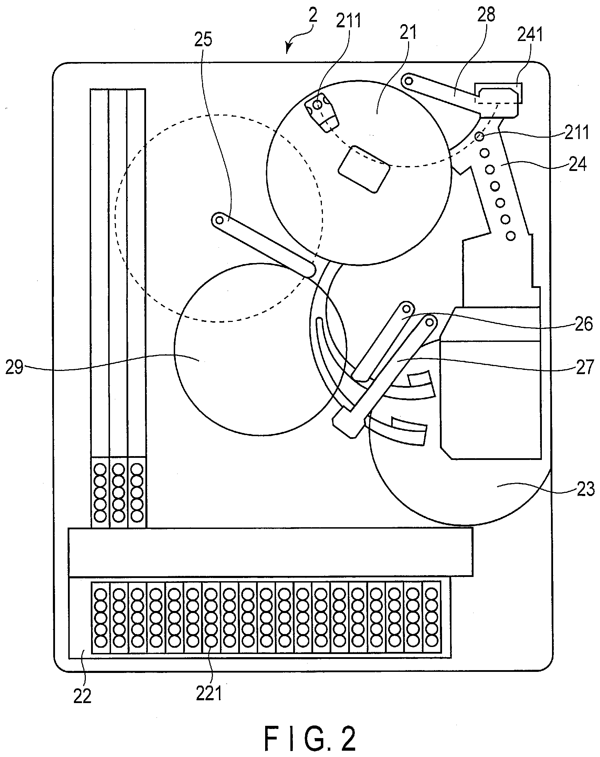

FIG. 2 is a diagram showing a configuration of the analysis mechanism 2. The analysis mechanism 2 includes a coagulation reaction unit 21, a rack sampler 22, a reagent storage 23, and a reaction tube storage 24. The analysis mechanism 2 further includes a specimen dispensing arm 25, a first reagent dispensing arm 26, a second reagent dispensing arm 27, and a reaction tube arm 28.

With the assistance of the driving mechanism 4, the analysis mechanism 2 conveys reaction tubes 211 held by the annular coagulation reaction unit 21. The analysis mechanism 2 performs, at every analysis cycle, dispensing operation of a blood sample or a standard solution, each serving as a specimen, and a reagent to the reaction tube 211 to be conveyed. The coagulation reaction unit 21 may be referred to as a "reaction disk".

The coagulation reaction unit 21 is configured to measure blood coagulation. The coagulation reaction unit 21 holds the plurality of reaction tubes 211 aligned in an annular arrangement, and conveys the held reaction tubes 211 along a predetermined path. With the assistance of the driving mechanism, the coagulation reaction unit 21 alternately repeats rotating and stopping in predetermined time intervals (hereinafter, each time interval will be referred to as an "analysis cycle").

The rack sampler 22 movably supports a plurality of specimen racks 221 each capable of holding a plurality of specimen containers that contain a specimen for which a measurement request has been made. FIG. 2 shows an example in which the plurality of specimen racks 221 are each capable of holding a row of five sample containers. The rack sampler 22 conveys the specimen racks 221 from a feed position in which the specimen racks 221 are fed to a specimen aspiration position in which a specimen is aspirated by a specimen dispensing probe. For example, the specimen aspiration position is set at an intersection between the round trajectory of the specimen dispensing arm 25 and the traveling path of the specimen racks 221.

The reagent storage 23 refrigerates and stores a first reagent and a second reagent. Specifically, the reagent storage 23 refrigerates a plurality of reagent containers configured to contain the first reagent that reacts with a given component in a standard specimen and a subject specimen, and refrigerates a plurality of reagent containers configured to contain the second reagent that reacts with a given component in a standard specimen and a subject specimen. The second reagent is, for example, a reagent that forms a pair with the first reagent in the dual-reagent system. The second reagent may be a reagent having the same components and the same concentration as the first reagent.

The reagent storage 23 is covered by a detachable reagent cover. The reagent storage 23 encloses a reagent rack in such a manner that the reagent rack can rotate. The reagent rack holds the plurality of reagent containers aligned in an annular arrangement. The reagent rack is driven by the driving mechanism 4 to thereby rotate and stop at each analysis cycle.

A first reagent aspiration position and a second reagent aspiration position are set at predetermined positions on the reagent storage 23. The first reagent suction position is set at, for example, an intersection between the round trajectory of the first reagent dispensing arm 26 and the traveling path of the openings of the reagent containers that contain the first reagent. The second reagent aspiration position is set at, for example, an intersection between the round trajectory of the second reagent dispensing arm 27 and the traveling path of the openings of the reagent containers that contain the second reagent.

The reaction tube storage 24 stores the plurality of reaction tubes 211. The reaction tube 211 may be formed of, for example, a glass material, a polypropylene (PP) material, or an acrylic material. The reaction tube 211 may be referred to as a "cuvette" or a "reaction container".

The specimen dispensing arm 25 is provided between the coagulation reaction unit 21 and the rack sampler 22. The specimen dispensing arm 25 is adapted so that it can vertically ascend and descend and also horizontally rotate, with the assistance of the driving mechanism **4.** The specimen dispensing arm 25 carries the specimen dispensing probe at its one end.

The specimen dispensing probe pivots along an arc circling trajectory in conjunction with the rotation of the specimen dispensing arm 25. This circling trajectory is set such that the openings of the sample containers held by the specimen rack 221 on the rack sampler 22 will come under it.

Also, the circling trajectory of the specimen dispensing probe includes a sample discharging position for the specimen dispensing probe to discharge an aspirated specimen to the reaction tube 211. The specimen discharging position corresponds to an intersection between the circling trajectory of the specimen dispensing probe and the traveling path of the reaction tube 211 held by the coagulation reaction unit 21.

The specimen dispensing probe is driven by the driving mechanism 4 such that it ascends or descends at a position directly above the opening of one specimen container held by the specimen rack 221 on the rack sampler 22, or at the specimen discharging position.

Under the control of the control circuit 9, the specimen dispensing probe aspirates the specimen from the specimen container positioned directly below it. Also under the control of the control circuit 9, the specimen dispensing probe discharges the aspirated specimen into the reaction tube 211 positioned directly below the specimen discharging position. In one example, the specimen dispensing probe performs a series of dispensing actions including aspiration and discharge once in one analysis cycle.

The first reagent dispensing arm 26 is provided, for example, between the coagulation reaction unit 21 and the reagent storage 23. The first reagent dispensing arm 26 is adapted such that it can vertically ascend and descend and also horizontally rotate with the assistance of the driving mechanism 4. The first reagent dispensing arm 26 carries the first reagent dispensing probe at its one end.

The first reagent dispensing probe pivots along an arc circling trajectory in conjunction with the rotation of the first reagent dispensing arm 26. This circling trajectory includes the first reagent aspirating position for the first reagent to be aspirated. Furthermore, the circling trajectory of the first reagent dispensing probe includes the first reagent discharging position set for the first reagent dispensing probe to discharge the aspirated reagent to the reaction tube 211. The first specimen discharging position corresponds to an intersection between the circling trajectory of the first reagent dispensing probe and the traveling path of the reaction tube 211 held by the coagulation reaction unit 21.

The first reagent dispensing probe is driven by the driving mechanism 4 such that it ascends or descends at the first reagent aspirating position and first reagent discharging position on the circling trajectory. Under the control of the control circuit 9, the first reagent dispensing probe aspirates the first reagent from the reagent container directly below the first reagent aspirating position. Also under the control of the control circuit 9, the first reagent dispensing probe discharges the aspirated first reagent into the reaction tube 211 directly below the first reagent discharging position. In one example, the first reagent dispensing probe performs a series of dispensing actions including aspiration and discharge on the first reagent once in one analysis cycle.

The second reagent dispensing arm 27 is provided, for example, between the coagulation reaction unit 21 and the reagent storage 23. The second reagent dispensing arm 27 is adapted such that it can vertically ascend and descend and also horizontally rotate with the assistance of the driving mechanism 4. The second reagent dispensing arm 27 carries the second reagent dispensing probe at its one end.

The second reagent dispensing probe pivots along an arc circling trajectory in conjunction with the rotation of the second reagent dispensing arm 27. This circling trajectory includes the second reagent aspirating position for the second reagent to be aspirated. Furthermore, the circling trajectory of the second reagent dispensing probe includes the second reagent discharging position set for the second reagent dispensing probe to discharge the aspirated reagent to the reaction tube 211. The second specimen discharging position corresponds to an intersection between the circling trajectory of the second reagent dispensing probe and the traveling path of the reaction tube 211 held by the coagulation reaction unit 21.

The second reagent dispensing probe is driven by the driving mechanism 4 such that it ascends or descends at the second reagent aspirating position and second reagent discharging position on the circling trajectory. Under the control of the control circuit 9, the second reagent dispensing probe aspirates the second reagent from the reagent container directly below the second reagent aspirating position. Also under the control of the control circuit 9, the second reagent dispensing probe discharges the aspirated second reagent into the reaction tube 211 directly below the second reagent discharging position. In one example, the second reagent dispensing probe performs a series of dispensing actions including aspiration and discharge on the second reagent once in one analysis cycle.

The reaction tube arm 28 is provided, for example, between the coagulation reaction unit 21 and the reaction tube storage 24. The reaction tube arm 28 is adapted such that it can vertically ascend and descend and also horizontally rotate, with the assistance of the driving mechanism 4. The reaction tube arm 28 carries a reaction tube holder on its one end.

The reaction tube holder pivots along an arc circling trajectory in conjunction with the rotation of the reaction tube arm 28. This circling trajectory is set such that the reaction tube 211 held by the reaction tube storage 24 will come under it. The reaction tube arm 28 holds the reaction tube 211 stored in the reaction tube storage 24 and installs the held reaction tube 211 on the coagulation reaction unit 21. The reaction tube arm 28 is configured to remove from the coagulation reaction unit 21 the reaction tube 211 that has undergone measurement, and conveys it to a reaction tube discarding unit 241.

As shown in FIG. 2, the analysis mechanism 2 further includes a biochemical reaction unit 29 that performs measurement relating to a biochemical test on a specimen. The biochemical reaction unit 29 may be omitted.

Next, a configuration of the coagulation reaction unit 21 will be described in detail.

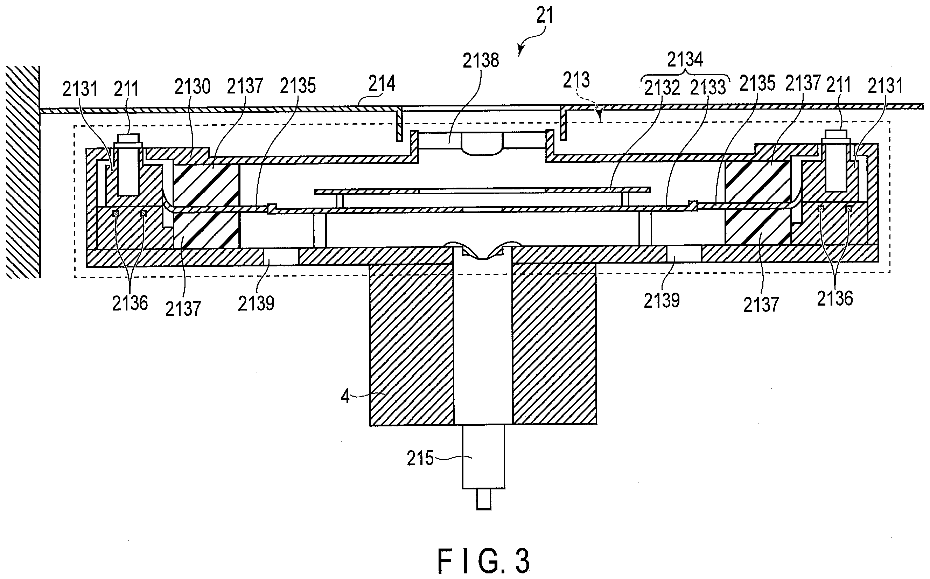

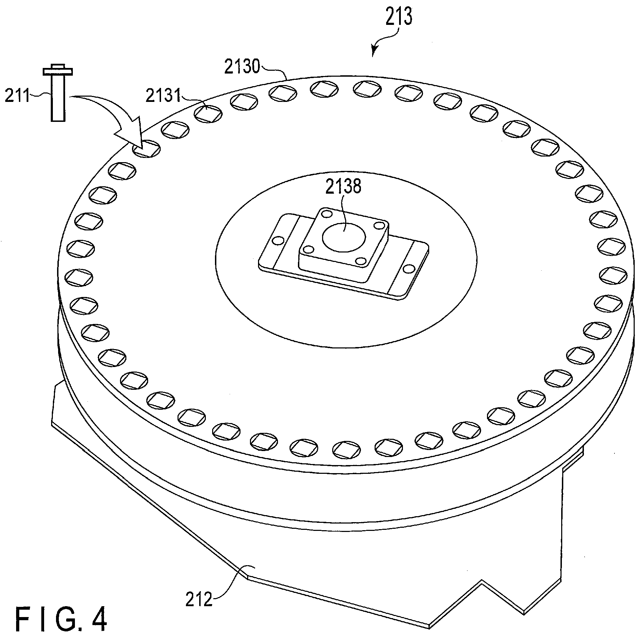

FIG. 3 is a diagram showing an internal configuration of the coagulation reaction unit 21. FIG. 3 is a cross-sectional view showing the coagulation reaction unit 21 in a section that passes through the vicinity of the rotation axis of the coagulation reaction unit 21 and is vertically parallel to the coagulation reaction unit 21. The coagulation reaction unit 21 includes a supporter 212 (see FIG. 4), a reaction bath 213, a cover 214, and a rotation connector 215.

The supporter 212 supports the entire coagulation reaction unit 21.

The reaction bath 213 is attached to the upper portion of the supporter 212. The reaction bath 213 is a rotary reaction bath configured to rotate with respect to the supporter 212 with the assistance of the driving mechanism 4. The driving mechanism 4 that causes the reaction bath 213 to rotate is formed of, for example, a stepping motor. The driving mechanism 4 that causes the reaction bath 213 to rotate is an example of a driver. The reaction bath 213 holds the plurality of reaction tubes 211 that contain a mixed solution of a specimen and a reagent, and repeats rotating and stopping to convey the held reaction tubes 211.

The cover 214 is a cover provided on the upper portion of the reaction bath 213 in order to prevent external light from entering the reaction bath 213. The cover 214 is detachably attached to, for example, the inner wall of the analysis mechanism 2 located in the vicinity of the coagulation reaction unit 21. The cover 214 does not rotate along with the reaction bath 213. The cover 214 may be detachably attached to the supporter 212.

The rotation connector 215 is a connector for supplying power for activating respective devices provided in the reaction bath 213 from the outside of the coagulation reaction unit 21, and for signals and data generated by the respective devices provided in the reaction bath 213 to the outside of the coagulation reaction unit 21. Examples of the respective devices provided in the reaction bath 213 include a photometry port 2131, a heater 2136, a temperature sensor, etc., which will be described later. For example, the rotation connector 215 electrically connects the remaining units excluding the reaction bath of the analysis mechanism 2, the analysis circuit 3, and the external units such as the control circuit 9 and a power supply device to the photometry port 2131 provided inside the coagulation reaction unit 21, which will be described later. The rotation connector 215 is a connector that can provide electrical connection between a rotating body and a fixed object. As the rotation connector 215, for example, a slip ring is used. Other connectors having the same function as that of the slip ring (for example, a connector that provides electrical connection through contact via liquid metal) may be used as the rotation connector 215. Each of the analysis mechanism 2, the analysis circuit 3, the control circuit 9, and the power supply device is an example of the second unit.

Next, a configuration of the reaction bath 213 will be described in detail.

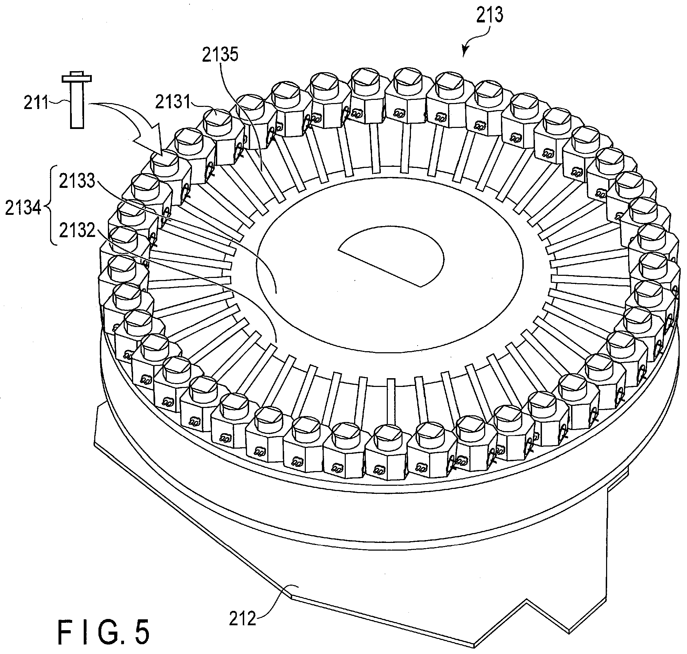

FIG. 4 is a perspective view showing the configuration of the reaction bath 213. The reaction bath 213 includes an exterior 2130 and a plurality of photometry ports 2131. FIG. 5 is a perspective view showing a state in which the exterior 2130 is removed from the reaction bath 213 shown in FIG. 4. The reaction bath 213 also includes a first substrate 2132, a second substrate 2133, and a plurality of third substrates 2135.

The reaction bath 213 holds the plurality of photometry ports 2131 aligned in an annular arrangement. The photometry port 2131 is provided inside the reaction bath 213. The photometry port 2131 is fixed inside the reaction bath 213 and rotates along with the reaction bath 213. One photometry port 2131 is provided for each of the plurality of reaction tubes 211 installed in the reaction bath 213. When measurement is performed, one reaction tube 211 is installed in each of the photometry ports 2131. Each photometry port 2131 optically measures a given component in a mixed solution of a specimen and a reagent discharged into the reaction tube 211.

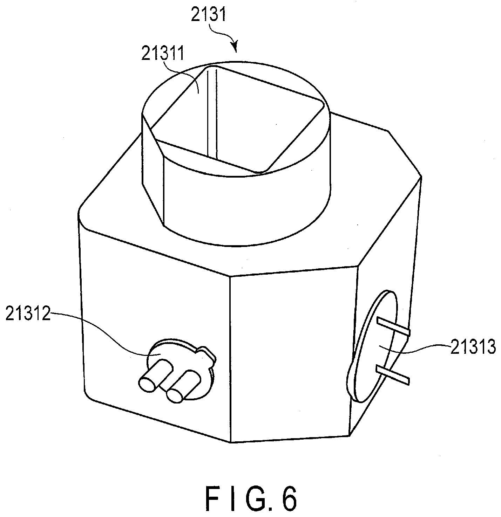

For example, the photometry ports 2131 are all the same in configuration. FIG. 6 is a perspective view showing the configuration of each of the photometry ports 2131. FIG. 6 shows a single photometry port 2131 removed from the reaction bath 213. As shown in FIG. 6, the photometry port 2131 has a reaction tube holder 21311, a light source 21312, and a light receiver 21313. The photometry ports 2131 may not be the same in configuration. For example, only some of the photometry ports may be provided with a plurality of light sources 21312.

The reaction tube 211 is installed in the reaction tube holder 21311. For example, the reaction tube holder 21311 is a hole into which the reaction tube 211 is inserted.

Each of the photometry ports 2131 is provided with, for example, one reaction tube holder 21311, one light source 21312, and one light receiver 21313. In this case, one light source 21312 and one light receiver 21313 are provided for each reaction tube holder 21311. The light source 21312 and the light receiver 21313 are examples of a photometry portion that performs photometry on a mixed solution housed in the reaction tube 211 installed in the reaction tube holder 21311. The light receiver 21313 is, for example, a photodetector including a photodiode. The photometry port 2131 emits light from the light source 21312 under the control of the control circuit 9. The photometry port 2131 detects, through the light receiver 21313, scattered light that is generated by emitting light to the reaction tube 211 inserted into the reaction tube holder 21311. Specifically, the light receiver 21313 detects scattered light of the light emitted to the mixed solution inside the reaction tube 211. The photometry port 2131 converts the light detected by the light receiver 21313 into a weak electrical signal, and outputs the converted electrical signal to the substrate unit 2134 via the third substrate 2135. The light source 21312 and the light receiver 21313 are examples of a photometry portion.

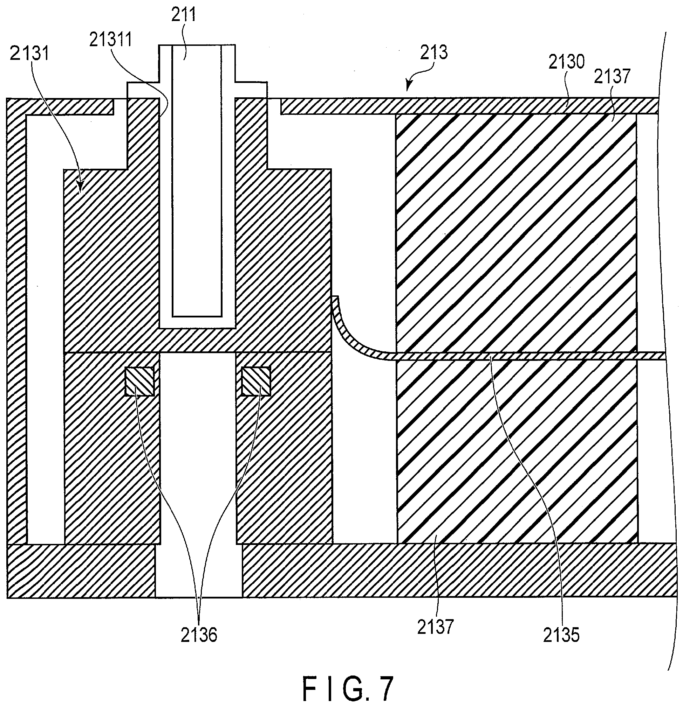

FIG. 7 is an enlarged view of the vicinity of the photometry port 2131 shown in FIG. 3. FIG. 7 shows a state in which the reaction tube 211 is installed in the photometry port 2131. As shown in FIG. 7, the reaction bath 213 includes a heater 2136. Each photometry port 2131 is retained at a constant temperature by the heater 2136 provided inside the reaction bath 213.

The heater 2136 is arranged below each photometry port 2131. The heater 2136 is, for example, a heating wire. Examples of a material of the heating wire include nichrome wire and iron chrome wire. FIG. 7 shows the example in which the heater 2136 is composed of two heating wires in an annular arrangement. The heater 2136 heats the photometry port 2131 under the control of the control circuit 9.

A temperature sensor may be provided in the vicinity of the photometry port 2131. As the temperature sensor, for example, a thermistor, a resistance temperature detector, a thermocouple, a temperature sensor IC, etc., are used. The temperature sensor measures an ambient temperature and outputs information on the measured temperature to the control circuit 9. The control circuit 9 uses the temperature information for temperature control to retain the temperature of the mixed solution housed in the reaction tube 211 installed in the photometry port 2131 at a constant temperature. For this reason, the heater 2136 may be called a "constant temperature portion".

The first substrate 2132 and the second substrate 2133 are, for example, rigid substrates. The first substrate 2132 and the second substrate 2133 are fixed to the inside of the reaction bath 213. Each of the first substrate 2132 and the second substrate 2133 is formed in a disc shape with its center being open and is fixed to the vicinity of the center of the reaction bath 213. The first substrate 2132 and the second substrate 2133 are electrically connected to each other via a cable (not shown), etc., and function as the single substrate unit 2134.

Each of the third substrates 2135 extends from the inside to the outside in the reaction bath 213. The third substrates 2135 are, for example, flexible printed circuits (FPC). Each of the third substrates 2135 has one end connected to the substrate unit 2134 and the other end connected to one of the plurality of photometry ports 2131. Each of the third substrates 2135 electrically connects between the substrate unit 2134 and the corresponding photometry port 2131. The third substrates 2135 may be connected to the second substrate 2133. In addition, a cable may be used instead of the third substrates 2135.

The substrate unit 2134 is fixed to the inside of the reaction bath 213 and is connected to each of the plurality of photometry ports 2131. Specifically, the substrate unit 2134 is electrically connected to the rotation connector 215 via a cable (not shown), etc. A cable that connects between the rotation connector 215 and the substrate unit 2134 may be connected to the first substrate 2132 or may be connected to the second substrate 2133. Power supplied from the outside to the reaction bath 213 via the rotation connector 215 is supplied to the respective photometry ports 2131 via the substrate unit 2134 and the third substrates 2135, and measurement is performed at each of the photometry ports 2131. The substrate unit 2134 is an example of a first unit.

The substrate unit 2134 has a function of supplying power acquired from the power source arranged outside the reaction bath 213 to each of the photometry ports 2131 (hereinafter referred to as a "power supplying function"), and a function of processing signals acquired from the photometry ports 2131 each having the photometry unit (hereinafter referred to as a "signal processing function"). The power supply function is an example of the first function, and the signal processing function is an example of the second function. The substrate unit 2134 acquires from the photometry port 2131 an analog signal indicating a photometry result at the photometry port 2131, amplifies the acquired analog signal, converts the amplified analog signal into a digital signal, and outputs the converted digital signal to the outside of the coagulation reaction unit 21. Specifically, a fieldprogrammable gate array (FPGA) and a circuit having an amplifier function and an A/D converter function are formed on the substrate of the substrate unit 2134. The substrate unit 2134 acquires an analog signal from each photometry port 2131 using the FPGA, amplifies the acquired analog signal using the amplifier function, converts the amplified analog signal into a digital signal using the A/D converter function, and outputs the converted digital signal to the analysis circuit 3 via the rotation connector 215 using the FPGA. For example, the substrate unit 2134 acquires electrical signals from all of the photometry ports 2131 every 0.1 seconds. A circuit having other functions may be mounted on the substrate of the substrate unit 2134.

Each of the photometry ports 2131 and the external units are connected together via the substrate unit 2134 connected to each of the photometry ports 2131. Thus, the number of wires that connect between the external units and the substrate unit 2134 is smaller than the number of wires that connect between the substrate unit 2134 and the photometry ports 2131. That is, use of the substrate unit 2134 can reduce the number of cables for connecting between the reaction bath 213 and the external units and the number of wires and contacts in the rotation connector 215. Furthermore, transmission of digital data from the substrate unit 2134 to the analysis circuit 3 is performed by serial communication, for example. This case can further reduce the number of cables that connect between the reaction bath 213 and the external unit.

Furthermore, the coagulation reaction unit 21 is provided with a mechanism (hereinafter referred to as a heat suppressor) that suppresses heat generated in the substrate unit 2134 from being transmitted to the photometry ports 2131. The heat suppressor prevents the heat generated in the substrate unit 2134 from affecting the constant temperature function for the photometry ports 2131.

In the present embodiment, as shown in FIG. 3 and FIG. 7, a heat insulator 2137 is provided as the heat suppressor inside the reaction bath 213. The heat insulator 2137 is a ring-shaped member arranged between the photometry ports 2131 and the substrate unit 2134 and extending in an annular shape, and is fixed to each of the upper side and the lower side of the third substrates 2135. The heat insulator 2137 is made of, for example, a material with low thermal conductivity. Examples of a material forming the heat insulator 2137 include, for example, polyethylene foam, urethane foam, phenol resin foam, polyethylene foam, glass wool, cellulose fiber, wool breath, and carbonized cork.

The heat insulator 2137 functions as a partition between an area in which the photometry ports 2131 are arranged and an area in which the substrate unit 2134 is arranged. The third substrates 2135 pass through a gap in the heat insulator 2137 to extend from the area in which the photometry ports 2131 are arranged to the area in which the substrate unit 2134 is arranged. By the heat insulator 2137 being provided, heat transfer is suppressed between the area in which the photometry ports 2131 are arranged and the area in which the substrate unit 2134 is arranged. This suppresses heat generated in the substrate unit 2134 from being transferred to the photometry ports 2131. The heat insulator 2137 is an example of a suppressor. The heat insulator 2137 may be formed by stacking a plurality of heat insulating materials, and the third substrate 2135 may be caused to pass between the stacked materials. Alternatively, the heat insulator 2137 may be formed of an integrated heat insulating material having an opening, and the third substrate 2135 may be caused to pass through the opening.

The reaction bath 213 is provided with, as a heat suppressor, both a fan 2138 for cooling the substrate unit 2134 and a vent 2139. The fan 2138 and the vent 2139 are provided in a space in which the substrate unit 2134 is arranged.

The fan 2138 is attached to a portion of the exterior 2130, the portion forming the upper surface of the reaction bath 213. The fan 2138 is arranged, for example, in the center of the reaction bath 213 above the substrate unit 2134.

The fan 2138 communicates the inside and the outside of the reaction bath 213. The fan 2138 includes a propeller and a motor that rotates the propeller. The motor of the fan 2138 is electrically connected to the rotation connector 215 via a cable (not shown), etc. The motor is driven by power being supplied from the outside via the rotation connector 215, thereby causing the propeller to rotate. By this, the fan 2138 exhausts air inside the reaction bath 213 to the outside of the reaction bath 213. The fan 2138 is an example of a first fan. The fan 2138 generates a flow of air that cools the substrate unit 2134.

The vent 2139 is provided, for example, at the bottom of the reaction bath 213. The vent 2139 is a hole that communicates the outside and the inside of the reaction bath 213. The number of vents 2139 may be one, or a plurality of vents 2139 may be provided.

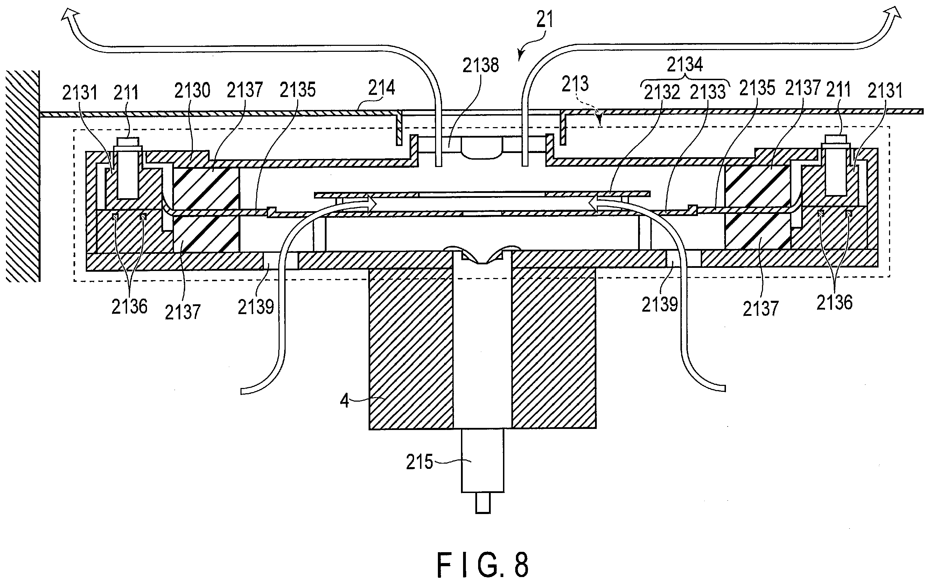

FIG. 8 is a diagram for explaining the flow of air inside the reaction bath 213 shown in FIG. 3. In the area in which the substrate unit 2134 is arranged, in response to the air inside the reaction bath 213 being discharged to the outside of the reaction bath 213 via the fan 2138, the air below the reaction bath 213 flows into the reaction bath 213 via the vent 2139. By the air outside the reaction bath 213 continuously flowing into the reaction bath 213, the substrate unit 2134 is cooled down.

Through the system control function 91, the control circuit 9 controls the setting and updating operation of execution information based on the analysis request information, the moving operation of the specimen racks 221, the rotating and dispensing operation of the specimen dispensing arm 25, the rotating operation of the reagent rack, the rotating and dispensing operation of the first reagent dispensing arm 26, the rotating and dispensing operation of the second reagent dispensing arm 27, the rotating and dispensing operation of the reaction tube arm 28, etc. Through the system control function 91, the control circuit 9 controls the rotating operation of the reaction bath 213, the measurement operation by the photometry port 2131, the heat generation state of the heater 2136, the activation state of the fan 2138, etc.

Hereinafter, the effect of the automatic analyzer 1 according to the present embodiment will be described.

The automatic analyzer 1 according to the present embodiment includes the reaction bath 213, the plurality of photometry ports 2131 fixed to the reaction bath 213, and the driving mechanism 4. Each of the photometry ports 2131 includes the reaction tube holder 21311 that houses a mixed solution of a specimen and a reagent, and the light source 21312 and the light receiver 21313 both serving as a photometry portion that measures the mixed solution housed in the reaction tube 211. The light source 21312 and the light receiver 21313 are provided for each reaction tube holder 21311. The reaction bath 213 includes the plurality of photometry ports 2131, and repeats rotating and stopping to convey the reaction tube 211 held by the reaction tube holder 21311. The driving mechanism 4 causes the reaction bath 213 to rotate.

In the automatic analyzer 1 according to the present embodiment with the above configuration, the reaction bath 213 for the blood coagulation measurement to be performed is formed into a circular shape, and is rotated by the driving mechanism 4. A plurality of photometry portions called the photometry ports 2131 are fixed to the inside of the reaction bath 213, and the measurement is performed by installing the disposable reaction tube 211 in each of the photometry ports 2131. The measurement using the plurality of photometry ports 2131 realizes improved examination throughput as compared to the case of using only one photometry portion. In addition, use of the rotary reaction bath 213 enables the reaction tubes 211 installed in the photometry ports 2131 to be conveyed. This enables dispersion of a specimen and a reagent to each reaction tube 211 and installation and removal of each reaction tube 211 at a specific position. This can simplify and downsize the configuration and operation of the mechanism for dispensing specimens and reagents into the reaction tubes 211 and the mechanism for installing and removing the reaction tubes 211. That is, this can simplify the operation of the mechanism for accessing the reaction bath 213 configured to perform the blood coagulation, optimize the number of units provided in the automatic analyzer 1 and the size of the entire automatic analyzer 1, and also improve the examination throughput.

The automatic analyzer 1 according to the present embodiment further includes the substrate unit 2134. The substrate unit 2134 is provided inside the reaction bath 213 and is connected to each of the plurality of photometry ports 2131. The substrate unit 2134 has the power supplying function of supplying power acquired from the power supply provided outside the reaction bath 213 to each of the photometry ports 2131 and the signal processing function of processing signals acquired from the photometry ports 2131.

The signal processing function has a function of, for example, acquiring from each of the photometry ports 2131 an analog signal indicating a photometry result function at the corresponding photometry port 2131, a function of amplifying the acquired analog signal, a function of converting the amplified analog signal into a digital signal, and a function of outputting the converted digital signal to the outside of the reaction bath 213.

Each of the photometry ports 2131 and the external units are connected together using the substrate unit 2134 connected to each of the photometry ports 2131. Thus, the number of wires that connect between the external units and the substrate unit 2134 is smaller than the number of wires that connect between the substrate unit 2134 and the photometry ports 2131. This can reduce the number of cables that connect between the respective photometry ports 2131 and the external units and the number of wires and contacts in the rotation connector 215.

The automatic analyzer 1 according to the present embodiment further includes the rotation connector 215 that electrically connects between the external units of the reaction bath 213 and the photometry ports 2131. For example, a slip ring is used as the rotation connector 215. Use of the rotation connector 215 enables transmission of power for activating the photometry ports 2131 between the photometry ports 2131 rotating along with the reaction bath 213 and the external units and transmission of an electric signal indicating a photometry result at the corresponding photometry port 2131.

The reaction bath 213 according to the present embodiment further includes a heat suppressor that suppresses heat generated in the substrate unit 2134 from being transferred to the photometry ports 2131. This configuration suppresses the heat generated in the substrate unit 2134 from affecting the constant temperature function for the photometry ports 2131.

The reaction bath 213 according to the present embodiment includes a heat insulator 2137 as a heat suppressor. The heat insulator 2137 is made of a material with low thermal conductivity and functions as a partition provided between each of the photometry ports 2131 and the substrate unit 2134 inside the reaction bath 213. By the heat insulator 2137 being provided, the space in which the photometry ports 2131 are arranged and the space in which the substrate unit 2134 is arranged are separated, and the heat generated in the substrate unit 2134 is suppressed from being transmitted to the photometry ports 2131.

The reaction bath 213 according to the present embodiment includes, as a heat suppressor, the fan 2138 that exhausts air inside the reaction bath 213 to the outside of the reaction bath 213, and the vent 2139 that causes air outside the reaction bath 213 to flow into the reaction bath 213. By providing the fan 2138 and the vent 2139, an air flow is generated inside the reaction bath 213, and the substrate unit 2134 is cooled down by the generated air flow. By the substrate unit 2134 being cooled, the heat generated in the substrate unit 2134 is suppressed from being transferred to the photometry ports 2131.

### (First Modification)

A first modification of the embodiment will be described. In this modification, the configuration of the embodiment is modified as will be described below. The present modification is provided with, as a mechanism for cooling the substrate unit 2134, a second fan configured to cool down air outside the reaction bath 213, in addition to the fan 2138 provided inside the reaction bath 213. Descriptions of the structures, operations, and advantageous effects similar to those of the embodiment will be omitted.

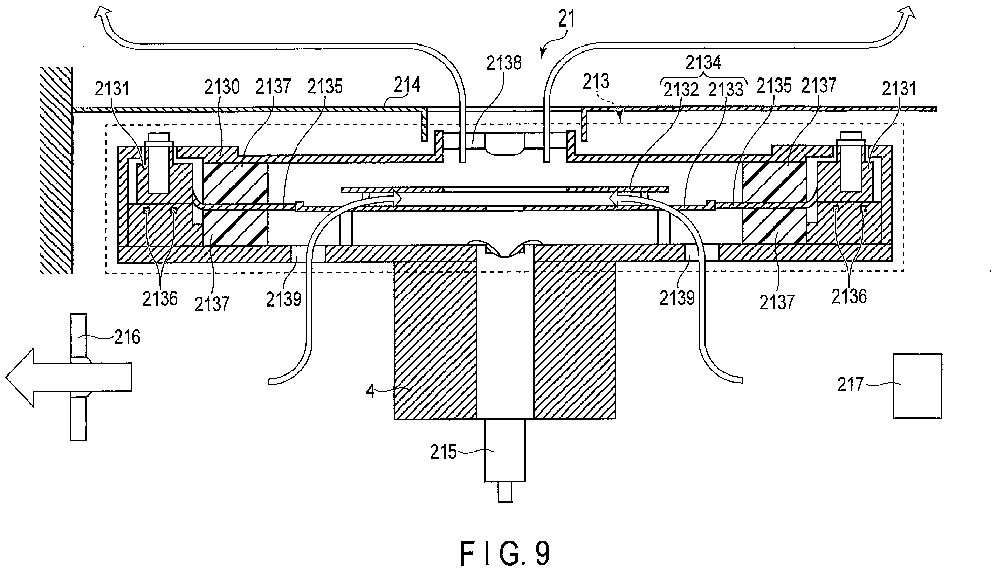

FIG. 9 is a diagram showing an internal configuration of the coagulation reaction unit 21. FIG. 9 is a cross-sectional view showing the coagulation reaction unit 21 in a section that passes through the vicinity of the rotation axis of the coagulation reaction unit 21 and is vertically parallel to the coagulation reaction unit 21. As shown in FIG. 9, the coagulation reaction unit 21 further includes, as the heat suppressor, a fan 216 and a temperature sensor 217.

The fan 216 is provided outside the reaction bath 213, and causes air in the vicinity of the vent 2139 to flow. For example, the fan 216 is arranged below the reaction bath 213. The fan 216 is attached to, for example, the inner wall of the analysis mechanism 2 located in the vicinity of the coagulation reaction unit 21. The fan 216 may be fixed to the supporter 212. Under the control of the control circuit 9, the fan 216 cools air present in the space below the reaction bath 213 by circulating it. For example, the fan 216 sends air present in the space below the reaction bath 213 to the outside, thereby circulating air present in the space below the reaction bath 213. By air present in the space below the reaction bath 213 being cooled, the cooled air passes through the vent 2139 to flow into the reaction bath 213. The fan 216 is an example of a second fan.

The temperature sensor 217 is a sensor that detects a temperature of ambient air. For example, the fan 216 is fixed to the supporter 212 below the reaction bath 213. The temperature sensor 217 detects a temperature of air cooled by the fan 216. As the temperature sensor 217, for example, a thermistor, a resistance temperature detector, a thermocouple, a temperature sensor IC, etc., are used. The temperature sensor 217 outputs information on the measured temperature to the control circuit 9.

The control circuit 9 controls the activation state of the fan 216 in accordance with a detection result by the temperature sensor 217. For example, in the case where the temperature detected by the temperature sensor 217 is equal to or smaller than a set value, the control circuit 9 determines that air for use in cooling the substrate unit 2134 has a sufficiently low temperature, and brings the fan 216 to a stop state. On the other hand, in the case where the temperature detected by the temperature sensor 217 exceeds the set value, the control circuit 9 determines that air for use in cooling the substrate unit 2134 has been warmed, and activates the fan 216 to cool the air for use in cooling the substrate unit 2134. The control circuit 9 is an example of the controller.

Hereinafter, the advantageous effects of the automatic analyzer 1 according to the present modification will be described.

The automatic analyzer 1 according to the present embodiment aspirates air below the reaction bath 213 using the vent 2139, and cools the substrate unit 2134 using the aspirated air. Therefore, in the case where heat is accumulated within the automatic analyzer 1 and the air itself for use in cooling is warm, the cooling effects on the substrate unit 2134 are undesirably decreased.

The automatic analyzer 1 according to the present modification further includes the fan 216 provided outside the reaction bath 213 and configured to cause air in the vicinity of the vent 2139 to flow. By the fan 216 being provided, air for use in cooling the substrate unit 2134 circulates, thereby preventing the accumulation of heat inside the automatic analyzer 1. This can inhibit the increase in temperature of air for use in cooling the substrate unit 2134, thereby improving the capacity of cooling the substrate unit 2134.

The automatic analyzer 1 according to the present modification includes the temperature sensor 217 configured to detect a temperature of air in the vicinity of the vent 2139, and the control circuit 9 configured to control the activation state of the fan 216 in accordance with the temperature detected by the temperature sensor 217. For example, by causing the temperature sensor 217 to monitor a temperature of air for use in cooling the substrate unit 2134 and by activating the fan 216 only in the case where the temperature of air exceeds a set value, the capacity of cooling the substrate unit 2134 can be improved effectively with less power.

The fan 216 may be activated all the time while the measurement is performed in the coagulation reaction unit 21 without controlling the fan 216 using the temperature sensor 217. In this case, the temperature sensor 217 may be omitted.

Furthermore, the temperature sensor 217 may be arranged inside the reaction bath 213. In this case, the temperature sensor 217 detects a temperature of air that has flowed into the reaction bath 213 through the vent 2139, and outputs a result of the detection to the control circuit 9 via the rotation connector 215. The control circuit 9 controls the activation state of the fan 216 in accordance with a temperature of air that has flowed into the reaction bath 213, thereby inhibiting the increase in temperature of air for use in cooling the substrate unit 2134.

### (Second Modification)

A second modification of the embodiment will be described. In this modification, the configuration of the embodiment is modified as will be described below. The present modification is provided with, as a mechanism for cooling the substrate unit 2134, a fence for retaining air in the space below the reaction bath in addition to the fan 2138 provided inside the reaction bath 213. Descriptions of the configurations, operations, and advantageous effects similar to those of the embodiment will be omitted.

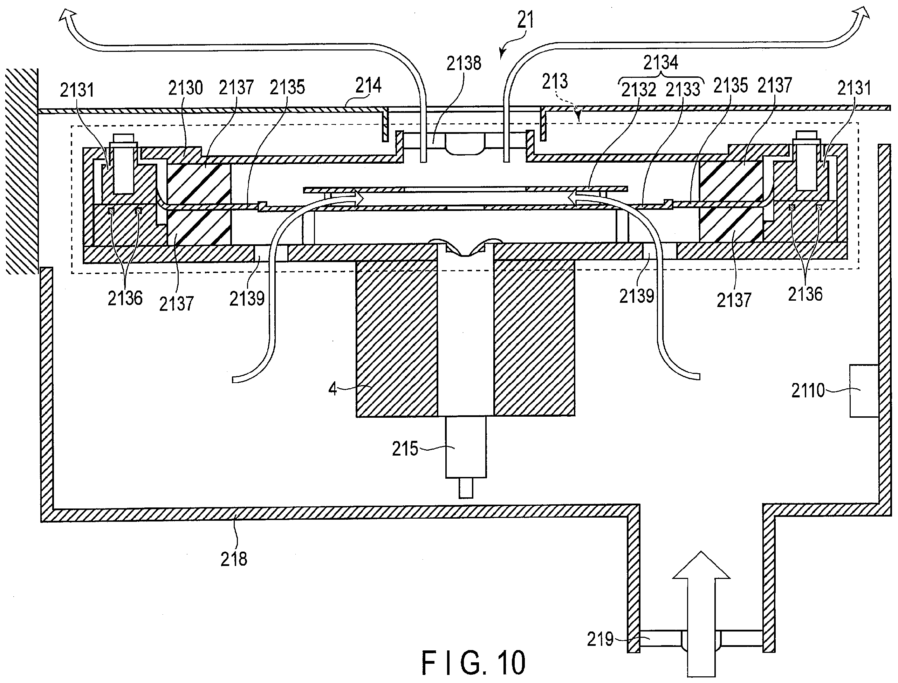

FIG. 10 is a diagram showing an internal configuration of the coagulation reaction unit 21. FIG. 10 is a cross-sectional view showing the coagulation reaction unit 21 in a section that passes through the vicinity of the rotation axis of the coagulation reaction unit 21 and is vertically parallel to the coagulation reaction unit 21. As shown in FIG. 10, the coagulation reaction unit 21 includes, as the heat suppressor, a storage 218, a fan 219, and a temperature sensor 2110.

The storage 218 is provided outside the reaction bath 213. For example, the storage 218 is fixed to the supporter 212 (not shown) below the reaction bath 213. The storage 218 stores air that will flow into the reaction bath 213 through the vent 2139. The storage 218 is formed of a fence surrounding air that will flow into the reaction bath 213 via the vent 2139. The fence forming the storage 218 is formed of, for example, a metal plate.

The fan 219 is attached to the storage 218. The fan 219 causes air outside the storage 218 to flow into the storage 218, thereby reducing the accumulation of heat inside the storage 218 and inhibiting the increase in temperature of air for use in cooling the substrate unit 2134. The air that has flowed into the storage 218 flows into the reaction bath 213 through the vent 2139 and is used for cooling the substrate unit 2134. The fan 219 is an example of a third fan.

The temperature sensor 2110 is a sensor attached to the inside of the storage 218 and configured to detect a temperature of air inside the storage 218. As the temperature sensor 2110, for example, a thermistor, a resistance temperature detector, a thermocouple, a temperature sensor IC, etc., are used. The temperature sensor 2110 outputs information on the detected temperature to the control circuit 9.

The control circuit 9 controls the activation state of the fan 219 in accordance with a detection result by the temperature sensor 2110. For example, in the case where the temperature detected by the temperature sensor 2110 is equal to or smaller than a set value, the control circuit 9 determines that air inside the storage 218 has a sufficiently low temperature, and brings the fan 216 to a stop state. On the other hand, in the case where the temperature detected by the temperature sensor 2110 exceeds the set value, the control circuit 9 determines that air inside the storage 218 has been warmed, and activates the fan 219. The control circuit 9 is an example of the controller.

Hereinafter, the advantageous effects of the automatic analyzer 1 according to the present modification will be described.

The automatic analyzer 1 according to the present modification further includes the storage 218 provided outside the reaction bath 213 and configured to store air that will flow into the reaction bath 213 through the vent 2139, and the fan 219 provided in the storage 218 and configured to cause air outside the storage 218 to flow into the storage 218. By the fan 219 being provided in the storage 218 in which air for use in cooling the substrate unit 2134 is stored, the air for use in cooling the substrate unit 2134 can be replaced effectively, thereby improving the capacity of cooling the substrate unit 2134.

Furthermore, the automatic analyzer 1 according to the present modification includes the temperature sensor 2110 configured to detect a temperature of air inside the storage 218, and the control circuit 9 configured to control the activation state of the fan 219 in accordance with the temperature detected by the temperature sensor 2110. For example, by causing the temperature sensor 2110 to monitor a temperature of air inside the storage 218 and by activating the fan 219 only in the case where the temperature of air exceeds a set value, the capacity of cooling the substrate unit 2134 can be improved effectively with less power.

The fan 219 may be activated all the time while the measurement is performed in the coagulation reaction unit 21 without controlling the fan 219 using the temperature sensor 2110. In this case, the temperature sensor 2110 may be omitted.

Furthermore, the temperature sensor 2110 may be arranged inside the reaction bath 213. In this case, the temperature sensor 2110 detects a temperature of air that has been introduced into the storage 218 by the fan 219 and caused to flow into the reaction bath 213 through the vent 2139, and outputs a result of the detection to the control circuit 9 through the rotation connector 215. The control circuit 9 controls the activation state of the fan 219 in accordance with a temperature of air that has flowed into the reaction bath 213, thereby inhibiting the increase in temperature of air for use in cooling the substrate unit 2134.

### (Third Modification)

A third modification of the embodiment will be described. In this modification, the configuration of the embodiment is modified as will be described below. In the present modification, an area in which heating elements are arranged in a concentrated manner is provided on the substrate, and a mechanism for cooling the substrate unit 2134 is arranged in the vicinity of this area. Descriptions of the configurations, operations, and advantageous effects similar to those of the embodiment will be omitted.

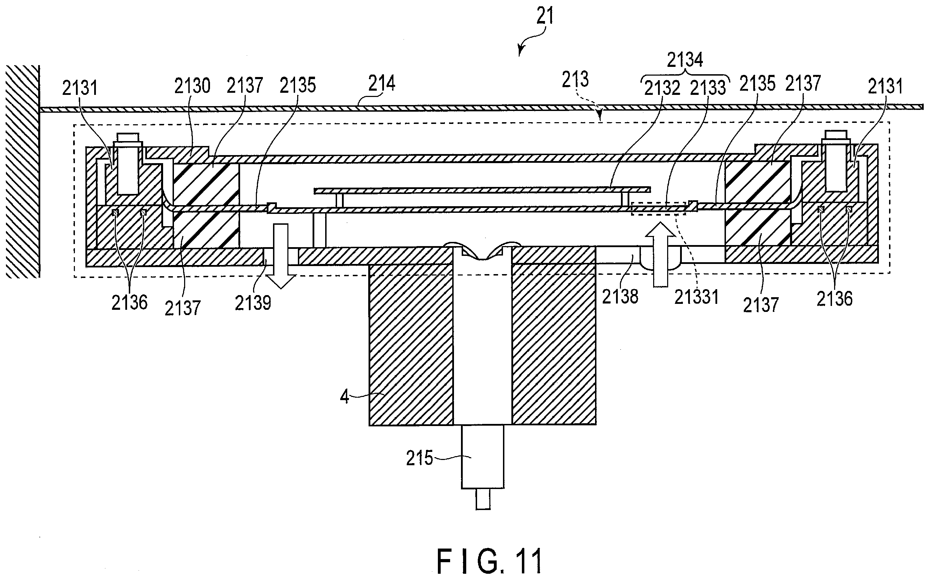

FIG. 11 is a diagram showing an internal configuration of the coagulation reaction unit 21 according to the present modification. FIG. 11 is a cross-sectional view showing the coagulation reaction unit 21 in a section that passes through the vicinity of the rotation axis of the coagulation reaction unit 21 and is vertically parallel to the coagulation reaction unit 21.

As shown in FIG. 11, the second substrate 2133 forming the substrate unit 2134 is provided with a heating concentrator 21331. In the heating concentrator 21331, elements arranged on the second substrate 2133 are arranged in a concentrated manner. By this, the amount of heat generated in the heating concentrator 21331 becomes larger than that of the remaining area on the second substrate 2133 while the measurement in the coagulation reaction unit 21 is performed.

The fan 2138 is provided in the vicinity of the heating concentrator 21331, and under the control of the control circuit 9, cools the heating concentrator 21331. The fan 2138 is arranged in such a manner as to cool the heating concentrator 21331 in a concentrated manner by sending air toward the heating concentrator 21331. For example, on the bottom surface of the reaction bath 213, the fan 2138 is arranged directly below the heating concentrator 21331, as shown in FIG. 11. The fan 2138 may be arranged above or beside the substrate unit 2134 as long as the fan 2138 can cool the heating concentrator 21331 in a concentrated manner. Furthermore, the fan 2138 circulates air inside the reaction bath 213 by flowing air outside the reaction bath 213 into the reaction bath 213.

Hereinafter, the advantageous effects of the automatic analyzer 1 according to the present modification will be described.

In the automatic analyzer 1 according to the present modification, the second substrate 2133 of the substrate unit 2134 is provided with the heating concentrator 21331 in which heat generating elements are arranged in a concentrated manner. The fan 2138 is provided in the vicinity of the heating concentrator 21331. This configuration enables the heating concentrator 21331 having the heat generating elements arranged in a concentrated manner to be cooled by the fan 2138 in a concentrated manner, so that the capacity of cooling the substrate unit 2134 can be improved.

### (Fourth Modification)

A fourth modification of the embodiment will be described. In this modification, the configuration of the embodiment is modified as will be described below. Descriptions of the configurations, operations, and advantageous effects similar to those of the embodiment will be omitted. In the present modification, one of the power supplying function and the signal processing function, which are both installed in the substrate unit 2134 in the above embodiment, is installed in the substrate unit 2134 and the other function is installed in an external unit. For example, the power supplying function for each of the photometry ports 2131 may be installed in the power supply device instead of the substrate unit 2134. Alternatively, for example, the signal processing function for each of the photometry ports 2131 may be installed in the analysis circuit 3 instead of the substrate unit 2134.

### (Fifth Modification)

A fifth modification of the embodiment will be described. In this modification, the configuration of the embodiment is modified as will be described below. Descriptions of the configurations, operations, and advantageous effects similar to those of the fifth embodiment will be omitted. In the present modification, the power supplying function and the signal processing function, which are both installed in the substrate unit 2134 in the above embodiment, are both installed in the external unit. For example, the power supplying function for each of the photometry ports 2131 may be installed in the power source device instead of the substrate unit 2134, and the signal processing function for each of the photometry ports 2131 may be installed in the analysis circuit 3 instead of the substrate unit 2134. The substrate unit 2134 may be omitted.

### (Sixth Modification)

A sixth modification of the embodiment will be described. Descriptions of the configurations, operations, and advantageous effects similar to those of the embodiment will be omitted. In this modification, the configuration of the embodiment is modified as will be described below. In the present modification, the fan 2138 rotates in the reverse direction from that of the present embodiment, and causes air outside the reaction bath 213 to flow into the reaction bath 213. Then, air flows in the reverse direction from the direction of air flow shown in FIG. 8. Air inside the reaction bath 213 is exhausted to the outside of the reaction bath 213 through the vent 2139.

According to the present embodiment also, by the air outside the reaction bath 213 continuously flowing into the reaction bath 213, the substrate unit 2134 is cooled down.

According to at least one of the above-described embodiments, examination throughput by the automatic analyzer can be improved.

## Claims

1. An automatic analyzer (1) for performing blood coagulation analysis test, comprising:
a plurality of reaction tube holders (21311) each configured to hold a reaction tube housing a mixed solution of a specimen and a reagent;
a plurality of photometry portions (2131) each of which is provided with respect to respective one of the reaction tube holders, each of the photometry portions including a light source (21312) and a light receiver (21313) and being configured tc perform photometry on the mixed solution housed in the reaction tube (211);
a reaction bath (213) to which the reaction tube holders and the photometry portions are fixed, the reaction bath being configured to repeat rotating and stopping to thereby convey the reaction tube held by each of the reaction tube holders; and
a driver (4) configured to rotate the reaction bath together with the reaction tube holders and the photometry portions.

2. The automatic analyzer according to claim 1, further comprising a first unit (2134) fixed to an inside of the reaction bath and connected to each of the photometry portions,
wherein the first unit includes at least one of a first function of supplying power acquired from a power source to each of the photometry portions, or a second function of processing a signal acquired from each of the photometry portions.

3. The automatic analyzer according to claim 2, further comprising a rotation connector (215) configured tc electrically connect between a second unit provided outside the reaction bath and the first unit.

4. The automatic analyzer according to claim 2, wherein wires that connect between a second unit provided outside the reaction bath and the first unit are smaller in number than wires that connect between the first unit and each of the photometry portions.

5. The automatic analyzer according to claim 4, wherein the second function includes:
a function of acquiring from each of the photometry portions an analog signal indicating a photometry result by the corresponding photometry portion;
a function of amplifying the acquired analog signal;
a function of converting the amplified analog signal to a digital signal; and
a function of outputting the converted digital signal to the second unit.

6. The automatic analyzer according to claim 4 or 5, further comprising a heat suppressor (2137) configured to suppress heat generated in the first unit from being transferred to the photometry portions.

7. The automatic analyzer according to claim 6, wherein the heat suppressor is made of a material with low thermal conductivity and includes a partition provided between the photometry portions and the first unit inside the reaction bath.

8. The automatic analyzer according to claim 6 or 7, wherein the heat suppressor includes a first fan (2138) configured to generate a flow of air for cooling the first unit.

9. The automatic analyzer according to claim 8, wherein the heat suppressor includes a vent (2139) for allowing air outside the reaction bath to flow into the reaction bath, and
the first fan exhausts air inside the reaction bath to an outside of the reaction bath.

10. The automatic analyzer according to claim 9, further comprising a second fan (216) provided outside the reaction bath and configured to cause air in a vicinity of the vent to flow.

11. The automatic analyzer according to claim 10, further comprising:
a sensor (217) configured to detect a temperature of air in the vicinity of the vent; and
a controller (9) configured to control an activation state of the second fan in accordance with a detection result by the sensor.

12. The automatic analyzer according to claim 9, further comprising:
a storage (218) provided outside the reaction bath and configured to store air which is to flow into the reaction bath through the vent; and
a third fan (219) provided for the storage and configured tc cause air outside the storage to flow into the storage.

13. The automatic analyzer according to claim 12, further comprising:
a sensor (2110) configured to detect a temperature of air inside the storage; and
the controller (9) configured to control an activation state of the third fan in accordance with a detection result by the sensor.

14. The automatic analyzer according to any one of claims 9 to 13, wherein the first unit includes a heating concentrator (21331) in which heat generating elements are arranged in a concentrated manner, and
the first fan is provided in a vicinity of the heating concentrator.

15. The automatic analyzer according to claim 3, wherein the first unit includes one of the first function and the second function, and
the second unit includes another one of the first function and the second function, which is different from the one included in the first unit.

16. The automatic analyzer according to claim 3 or 15, wherein the rotation connector electrically connects between the first unit and the second unit through contact between solid forms.

## Patentansprüche

1. Automatisches Analysegerät (1) zum Durchführen eines Analysetests zur Blutkoagulation, umfassend:
eine Vielzahl von Reaktionsgefäßhaltern (21311), die jeweils dafür konfiguriert sind, ein Reaktionsgefäß zu halten, in dem eine Mischlösung aus einer Probe und einem Reagenz aufgenommen ist;
eine Vielzahl von Photometrieabschnitten (2131), von denen jeder in Bezug auf einen jeweiligen der Reaktionsgefäßhalter bereitgestellt ist, wobei jeder von den Photometrieabschnitten eine Lichtquelle (21312) und einen Lichtempfänger (21313) einschließt und dafür konfiguriert ist, an der in dem Reaktionsgefäß (211) aufgenommenen Mischlösung eine Photometrie durchzuführen;
ein Reaktionsbad (213), an dem die Reaktionsgefäßhalter und die Photometrieabschnitte befestigt sind, wobei das Reaktionsbad dafür konfiguriert ist, ein Drehen und Anhalten zu wiederholen, um dadurch das von jedem der Reaktionsgefäßhalter gehaltene Reaktionsgefäß zu befördern; und
eine Antriebseinrichtung (4), die dafür konfiguriert ist, das Reaktionsbad zusammen mit den Reaktionsgefäßhaltern und den Photometrieabschnitten zu drehen.

2. Automatisches Analysegerät nach Anspruch 1, ferner umfassend eine erste Einheit (2134), die an einer Innenseite des Reaktionsbads befestigt und mit jedem der Photometrieabschnitte verbunden ist,
wobei die erste Einheit mindestens eine von einer ersten Funktion zum Zuführen von von einer Stromquelle erhaltenem Strom zu jedem der Photometrieabschnitte oder einer zweiten Funktion zum Verarbeiten eines Signals, das von jedem von den Photometrieabschnitten erhalten wird, einschließt.

3. Automatisches Analysegerät nach Anspruch 2, ferner umfassend ein Drehverbindungsstück (215), das dafür konfiguriert ist, eine elektrische Verbindung zwischen einer zweiten Einheit, die außerhalb des Reaktionsbads bereitgestellt ist, und der ersten Einheit herzustellen.

4. Automatisches Analysegerät nach Anspruch 2, wobei Drähte, die eine Verbindung zwischen einer zweiten Einheit, die außerhalb des Reaktionsbads bereitgestellt ist, und der ersten Einheit herstellen, eine geringere Anzahl aufweisen als Drähte, die eine Verbindung zwischen der ersten Einheit und jedem der Photometrieabschnitte herstellen.

5. Automatisches Analysegerät nach Anspruch 4, wobei die zweite Funktion Folgendes einschließt:
eine Funktion zum Erhalten, von jedem der Photometrieabschnitte, eines analogen Signals, das ein Photometrieergebnis von dem entsprechenden Photometrieabschnitt angibt;
eine Funktion zum Verstärken des erhaltenen analogen Signals;
eine Funktion zum Umwandeln des verstärkten analogen Signals in ein digitales Signal; und
eine Funktion zum Ausgeben des umgewandelten digitalen Signals an die zweite Einheit.

6. Automatisches Analysegerät nach Anspruch 4 oder 5, ferner umfassend eine Wärmehinderungseinrichtung (2137), die dafür konfiguriert ist, in der ersten Einheit erzeugte Wärme daran zu hindern, in die Photometrieabschnitte überführt zu werden.

7. Automatisches Analysegerät nach Anspruch 6, wobei die Wärmehinderungseinrichtung aus einem Material mit einer geringen Wärmeleitfähigkeit besteht und eine Trennwand einschließt, die zwischen den Photometrieabschnitten und der ersten Einheit innerhalb des Reaktionsbads bereitgestellt ist.

8. Automatisches Analysegerät nach Anspruch 6 oder 7, wobei die Wärmehinderungseinrichtung ein erstes Gebläse (2138) einschließt, das dafür konfiguriert ist, einen Luftstrom zum Kühlen der ersten Einheit zu erzeugen.

9. Automatisches Analysegerät nach Anspruch 8, wobei die Wärmehinderungseinrichtung eine Entlüftung (2139) einschließt, um es zu ermöglichen, dass Luft außerhalb des Reaktionsbads in das Reaktionsbad strömt, und das erste Gebläse Luft in dem Reaktionsbad zu einer Außenseite des Reaktionsbads ausstößt.

10. Automatisches Analysegerät nach Anspruch 9, ferner umfassend ein zweites Gebläse (216), das außerhalb des Reaktionsbads bereitgestellt und dafür konfiguriert ist, ein Strömen von Luft in einer Nähe der Entlüftung zu bewirken.

11. Automatisches Analysegerät nach Anspruch 10, ferner umfassend:
einen Sensor (217), der dafür konfiguriert ist, eine Temperatur von Luft in der Nähe der Entlüftung zu erkennen; und
eine Steuereinrichtung (9), die dafür konfiguriert ist, einen Aktivierungszustand des zweiten Gebläses gemäß einem Erkennungsergebnis von dem Sensor zu steuern.

12. Automatisches Analysegerät nach Anspruch 9, ferner umfassend:
einen Speicher (218), der außerhalb des Reaktionsbads bereitgestellt und dafür konfiguriert ist, Luft zu speichern, die durch die Entlüftung in das Reaktionsbad zu strömen hat; und
ein drittes Gebläse (219), das für den Speicher bereitgestellt und dafür konfiguriert ist, ein Strömen von Luft außerhalb des Speichers in den Speicher zu bewirken.

13. Automatisches Analysegerät nach Anspruch 12, ferner umfassend:
einen Sensor (2110), der dafür konfiguriert ist, eine Temperatur von Luft in dem Speicher zu erkennen; und
die Steuereinrichtung (9), die dafür konfiguriert ist, einen Aktivierungszustand des dritten Gebläses gemäß einem Erkennungsergebnis von dem Sensor zu steuern.

14. Automatisches Analysegerät nach einem der Ansprüche 9 bis 13, wobei die erste Einheit einen Wärmekonzentrator (21331) einschließt, in dem wärmeerzeugende Elemente auf konzentrierte Art angeordnet sind, und das erste Gebläse in einer Nähe des Wärmekonzentrators bereitgestellt ist.

15. Automatisches Analysegerät nach Anspruch 3, wobei die erste Einheit eine von der ersten Funktion und der zweiten Funktion einschließt, und die zweite Einheit eine andere von der ersten Funktion und der zweiten Funktion einschließt, die von der in der ersten Einheit eingeschlossenen verschieden ist.

16. Automatisches Analysegerät nach Anspruch 3 oder 15, wobei das Drehverbindungsstück eine elektrische Verbindung zwischen der ersten Einheit und der zweiten Einheit durch Kontakt zwischen festen Formen herstellt.

## Revendications

1. Analyseur automatique (1) pour réaliser un test d'analyse de coagulation sanguine, comprenant :
une pluralité de supports de tube de réaction (21311), chacun étant configuré pour contenir un tube de réaction logeant une solution mixte d'un échantillon et d'un réactif,
une pluralité de portions photométriques (2131), chacune desquelles est fournie en relation avec un support respectif des supports de tube de réaction, chacune des portions photométriques incluant une source de lumière (21312) et un récepteur de lumière (21313) et étant configurée pour effectuer une photométrie sur la solution mixte logée dans le tube de réaction (211),
un bain de réaction (213) auquel sont fixés les supports de tube de réaction et les portions photométriques, le bain de réaction étant configuré pour une répétition de rotations et d'arrêts pour transporter ainsi le tube de réaction maintenu par chacun des supports de tube de réaction, et
un dispositif d'entraînement (4) configuré pour faire tourner le bain de réaction conjointement avec les supports de tube de réaction et les portions photométriques.

2. Analyseur automatique selon la revendication 1, comprenant en outre une première unité (2134) fixée à l'intérieur du bain de réaction et reliée à chacune des portions photométriques,
ladite première unité incluant au moins une parmi une première fonction de fourniture d'énergie acquise en provenance d'une source d'alimentation à chacune des portions photométriques, ou une deuxième fonction de traitement d'un signal acquis à partir de chacune des portions photométriques.

3. Analyseur automatique selon la revendication 2, comprenant en outre un connecteur rotatif (215) configuré pour assurer une liaison électrique entre une deuxième unité fournie hors du bain de réaction et la première unité.

4. Analyseur automatique selon la revendication 2, dans lequel des fils qui assurent une liaison entre une deuxième unité fournie hors du bain de réaction et la première unité sont moins nombreux que des fils qui assurent une liaison entre la première unité et chacune des portions photométriques.

5. Analyseur automatique selon la revendication 4, dans lequel la deuxième fonction inclut :
une fonction d'acquisition, à partir de chacune des portions photométriques, d'un signal analogique indiquant un résultat de photométrie par la portion photométrique correspondante,
une fonction d'amplification du signal analogique acquis,
une fonction de conversion du signal analogique amplifié en un signal numérique, et
une fonction d'émission en sortie du signal numérique converti à destination de la deuxième unité.

6. Analyseur automatique selon la revendication 4 ou 5, comprenant en outre un atténuateur de chaleur (2137) configuré pour empêcher de la chaleur générée dans la première unité d'être transférée aux portions photométriques.

7. Analyseur automatique selon la revendication 6, dans lequel l'atténuateur de chaleur est composé d'un matériau à faible conductivité thermique et inclut une cloison fournie entre les portions photométriques et la première unité à l'intérieur du bain de réaction.

8. Analyseur automatique selon la revendication 6 ou 7, dans lequel l'atténuateur de chaleur inclut un premier ventilateur (2138) configuré pour générer un flux d'air pour refroidir la première unité.

9. Analyseur automatique selon la revendication 8, dans lequel l'atténuateur de chaleur inclut un évent (2139) pour permettre à de l'air à l'extérieur du bain de réaction de s'écouler dans le bain de réaction, et le premier ventilateur évacue de l'air de l'intérieur du bain de réaction vers l'extérieur du bain de réaction.

10. Analyseur automatique selon la revendication 9, comprenant en outre un deuxième ventilateur (216) fourni à l'extérieur du bain de réaction et configuré pour provoquer un écoulement de l'air à proximité de l'évent.

11. Analyseur automatique selon la revendication 10, comprenant en outre :
un capteur (217) configuré pour détecter une température de l'air à proximité de l'évent, et
un organe de commande (9) configuré pour commander un état d'activation du deuxième ventilateur en fonction d'un résultat de détection par le capteur.

12. Analyseur automatique selon la revendication 9, comprenant en outre :
un stockage (218) fourni à l'extérieur du bain de réaction et configuré pour stocker de l'air destiné à s'écouler dans le bain de réaction par le biais de l'évent, et
un troisième ventilateur (219) fourni pour le stockage et configuré pour faire circuler de l'air à l'extérieur du stockage dans ledit stockage.

13. Analyseur automatique selon la revendication 12, comprenant en outre :
un capteur (2110) configuré pour détecter une température de l'air à l'intérieur du stockage, et
l'organe de commande (9) configuré pour commander un état d'activation du troisième ventilateur en fonction d'un résultat de détection par le capteur.

14. Analyseur automatique selon l'une quelconque des revendications 9 à 13, dans lequel la première unité inclut un concentrateur de chauffage (21331) dans lequel des éléments générateurs de chaleur sont agencés de manière concentrée, et le premier ventilateur est fourni à proximité du concentrateur de chauffage.

15. Analyseur automatique selon la revendication 3, dans lequel la première unité inclut une parmi la première fonction et la deuxième fonction, et la deuxième unité inclut une autre parmi la première fonction et la deuxième fonction, qui est différente de celle incluse dans la première unité.

16. Analyseur automatique selon la revendication 3 ou 15, dans lequel le connecteur rotatif assure une liaison électrique entre la première unité et la deuxième unité par contact entre des formes solides.
